# EUROPEAN PATENT SPECIFICATION

(11) **EP 2 731 370 B1**
(45) Date of publication and mention of the grant of the patent: **11.04.2018**
(21) Application number: 12306394.3
(22) Date of filing: 12.11.2012
(51) Int. Cl.: H04L 29/06, H04W 12/04, H04W 12/06, H04W 8/20

(54) **SECURED AUTHENTICATION BETWEEN A COMMUNICATION DEVICE AND A SERVER**
GESICHERTE AUTHENTIFIZIERUNG ZWISCHEN EINER KOMMUNIKATIONSVORRICHTUNG UND EINEM SERVER
AUTHENTIFICATION SÉCURISÉE ENTRE UN DISPOSITIF DE COMMUNICATION ET UN SERVEUR

(43) Date of publication of application: 14.05.2014
(73) Proprietor: ALCATEL LUCENT, 92100 Boulogne-Billancourt (FR)
(72) Inventor: El Mghazli, Yacine, 91620 Nozay (FR); Thomas, Laurent, 91620 Nozya (FR)
(74) Representative: Mouney, Jérôme

(56) References cited:
- EP-A2- 2 337 307
- US-A1- 2009 205 028

## Description

### FIELD OF THE INVENTION

The present invention relates to a secured authentication between a communication device and a server, more especially to a secured authentication for server hosting website.

### BACKGROUND

Most of the Web sites are using http-based authentication that is based on the login/password method. Even if sometimes the password is sent via post mail, which is very long, this method is weak in terms of confidentiality, integrity, authenticity and non-repudiation. This is particularly important for web sites managing personal data, like social network, health, phone bills, or amount of money.

There is a need to improve authentication for Web sites, using a mechanism that is reliable in terms of confidentiality, integrity, authenticity and non-repudiation and that would be reasonably easy to use for users that are not familiar with security concerns.

The document EP 2 237 307, 22nd June 2011 (2011/06/22), describes a system that provides a secure platform-based subscriber identiy module service without requiring a physical SIM card.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for enabling a secured authentication between a communication device that is coupled with a smart card of a user being a subscriber of a telecommunication network and an application server that provides a service and is connected to the telecommunication network, the method comprising the following steps in a personalization server included in the telecommunication network:
receiving a request from the application server, the request containing an identifier of the user and an identifier of said service,
generating an authentication key and an international identity associated with the identifier of said service,
sending a message to the communication device, the message containing the authentication key, the international identity, an admin code, the identifier of said service, and a personalization command, in order that the smart card interprets the personalization command to store the authentication key, the international identity and the identifier if the admin code is valid,
sending a response to the application server, the response containing the authentication key and the international identity.

The invention advantageously provides a new generation of smart card which allows remote reconfiguration from an Over The Air server. The operator can leverage on its position to act as trusted third party between the user and a given website or service and sell the action to configure a dedicated profile on the smart card, on behalf of the website.

The user has no need to wait for a password via postal mail and the operation is painless for the user, as the operation is mainly executed between the operator and the website/internet service.

Moreover, when it changes its communication device, the user keeps the access rights which are embedded on the smart card.

In an embodiment, the application server is able to authenticate the communication device by means of a protocol using the authentication key and the international identity.

In an embodiment, the personalization server identifies the communication device by means of the identifier of the user.

In an embodiment, the identifier of the user is a call number.

In an embodiment, the personalization server retrieves the admin code that was initially stored in a database in correspondence with an identifier of the user corresponding to the identifier of the user comprised in the received request.

In an embodiment, an application in the smart card checks if the admin code received in the message is compatible with the admin code initially stored in the smart card in order to determine if the admin code is valid.

In an embodiment, the message is an encrypted short message.

In an embodiment, the message is decomposed in several messages.

In an embodiment, the message contains data packets sent to the smart card through a service node and a gateway node of the telecommunication network via a secured session.

A further object of the invention is a method for enabling a secured authentication between a communication device that is coupled with a smart card of a user being a subscriber of a telecommunication network and an application server that provides a service and is connected to the telecommunication network, the method comprising the following steps in the application server:
sending a request to the personalization server, the request containing an identifier of the user and an identifier of said service, in order that the personalization server generates an authentication key and an international identity associated with the identifier of said service, and sends a message to the communication device, the message containing the authentication key, the international identity, an admin code, the identifier of said service, and a personalization command, in order that the smart card interprets the personalization command to store the authentication key, the international identity and the identifier if the admin code is valid,
receiving a response from the personalization server, the response containing the authentication key and the international identity.

A further object of the invention is a personalization server for enabling a secured authentication between a communication device that is coupled with a smart card of a user being a subscriber of a telecommunication network and an application server that provides a service and is connected to the telecommunication network, the personalization server being included in the telecommunication network and comprising:
means for receiving a request from the application server, the request containing an identifier of the user and an identifier of said service,
means for generating an authentication key and an international identity associated with the identifier of said service,
means for sending a message to the communication device, the message containing the authentication key, the international identity, an admin code, the identifier of said service, and a personalization command, in order that the smart card interprets the personalization command to store the authentication key, the international identity and the identifier if the admin code is valid,
means for sending a response to the application server, the response containing the authentication key and the international identity.

A further object of the invention is an application server for enabling a secured authentication between a communication device that is coupled with a smart card of a user being a subscriber of a telecommunication network and the application server that provides a service and is connected to the telecommunication network, the application server comprising:
means for sending a request to the personalization server, the request containing an identifier of the user and an identifier of said service, in order that the personalization server generates an authentication key and an international identity associated with the identifier of said service, and sends a message to the communication device, the message containing the authentication key, the international identity, an admin code, the identifier of said service, and a personalization command, in order that the smart card interprets the personalization command to store the authentication key, the international identity and the identifier if the admin code is valid,
means for receiving a response from the personalization server (PS), the response containing the authentication key and the international identity.

In an embodiment, the application server is hosting a website providing said service.

The invention relates further to computer programs adapted to be executed in servers for enabling a secured authentication between a communication device and an application server, said programs including instructions which, when the program is executed in said servers, execute the steps of the method of the invention performed in the servers.

### BRIEF DESCRIPTION OF THE FIGURES

Some embodiments of the present invention are now described, by way of example only, and with reference to the accompanying drawings, in which:
- FIG. 1 is a schematic block-diagram of a communication system according to an embodiment of the invention,
- FIG. 2 is a flowchart showing steps performed to execute a method for a secured website authentication according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

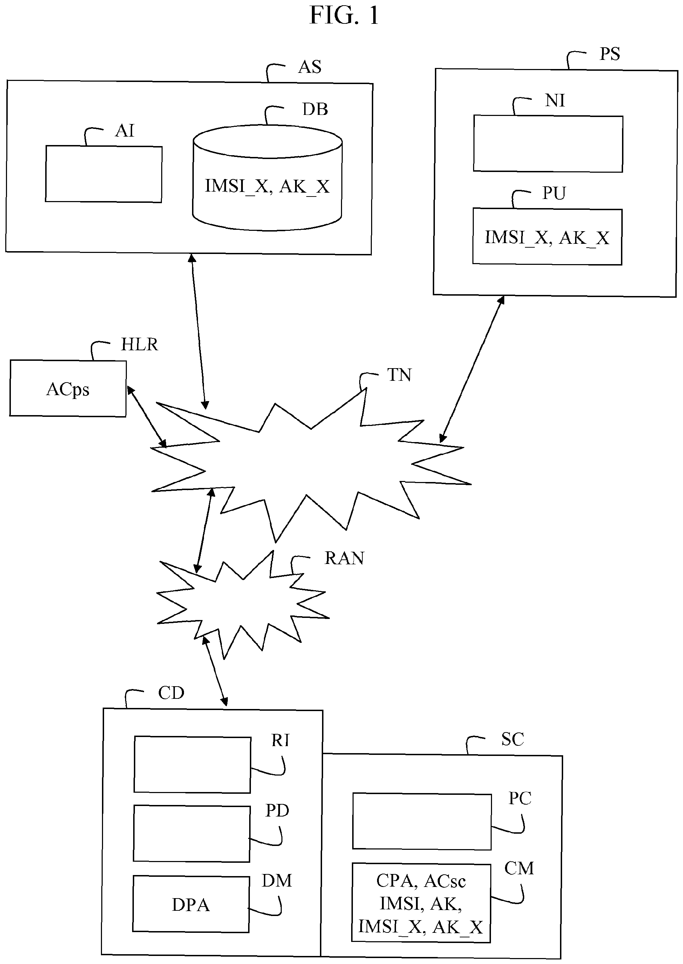

Referring to FIG. 1, a communication system comprises a personalization server PS and a communication device CD which are able to communicate between them through a telecommunication network TN, and at least an application server AS included in a packet network connected to the telecommunication network.

For example, the telecommunication network TN is a digital cellular radio communication network of the GSM (Global System for Mobile communications) or UMTS (Universal Mobile Telecommunications System) or even CDMA (Code Division Multiple Access) type or even LATE (Long Term Evolution) type. The GSM type network may be coupled with a GPRS (General Packet Radio Service) network for the transmission of data by packets with mobility and access management via radio. For example, the telecommunication network is able to authorize a communication device to send and receive data via the network when the communication device is identified at the network, for example by means of a subscriber identification module associated with the communication device.

Figure 1 does not represent known main components of the localization area of the telecommunication network where the communication device is situated. For example in a GSM type network, the localization area comprises an MSC (Mobile service Switching Center) which is connected by means of a BSC (Base Station Controller) to a base station BTS (Base Transceiver Station) connected by means of a radio link to the communication device.

The communication device CD can establish a connection with the telecommunication network TN through a respective radio access network RAN via a radio link with the base station. The radio access networks are distributed over a geographical area typically divided into cells that are served by a corresponding base station. Base stations communicate over an air interface with the user equipment, with several base stations being connected to a radio network controller (RNC) or base station controller (BSC) that is connected to one or more core networks. In the typical situation, secure communications for users of the system may be provided through encryption and decryption at the base station.

The telecommunication network TN comprises a Home Location Register HLR. The register HLR collaborates with an authentication center that manages a respective database containing, in particular, a set of international identities IMSI (International Mobile Subscriber Identity) and a set of authentication keys called AK each associated with a subscription profile for each user of the network.

The radio access network of the telecommunication network is connected to a set of service nodes SGSN and gateway-nodes GGSN (Gateway GPRS Support Node) supporting a packet-switched core network of the telecommunication network and is connected to a switch MSC supporting a circuit-switchecf core network of the telecommunication network. All of the SGSN and GGSN nodes constitute a gateway connecting the radio access network and the packet core network. According to the invention, the personalization server PS may be directly or indirectly accessible from the gateway node GGSN of the telecommunication network via a packet communication network, for example the Internet, and also from the switch MSC via a Short Message Service Center SMSC.

In order to not encumber the FIG. 1, the mentioned service node SGSN, gateway-node GGSN and Short Message Service Center SMSC of each telecommunication network are not represented.

Generally, telecommunication networks are using a strong authentication method based on a shared secret configured on the network side in the Authentication Center of the HLR or the HSS, and on the terminal side in the Universal Integrated Circuit Card (UICC) containing a SIM (Subscriber Identity Module) application for a GSM network or a USIM (Universal Subscriber Identity Module) in a UMTS network.

This shared secret is an authentication key and the action to configure a generic UICC card, called more generally hereinafter smart card, with a given authentication key is called personalization.

The authentication key is a 128 bit key used in the authentication and cipher key generation process. The authentication key is used to authenticate the smart card on the mobile network. Each smart card contains this authentication key which is assigned to it by the operator during the personalization process.

So Mobile Network Operators (MNOs) are physically personalizing the smart cards in their premises and once for all. Operators then send the personalized smart card to the user, who will insert it in his mobile terminal to access the mobile network of the MNO. The personalization can also be outsourced to the smart card provider, but it is always configured physically and for ever.

It is assumed here that an initial user profile is stored in a register HLR of the telecommunication network TN and in a smart card owned by the user, this initial user profile containing an authentication key and an international identity for authentication between the smart card and the telecommunication network.

The personalization server PS is a server included in the telecommunication network TN and managed by the operator of the telecommunication network TN.

In one variant, the personalization server PS is not managed by the operator of the telecommunication network TN, acting as an independent service entity.

The personalization server PS comprises a network interface NI handling exchange of messages with the smart card SC via the telecommunication network TN, for example via a Short Message Service Center SMSC. The network interface NI can communicate with a register HLR of the telecommunication network TN in order to obtain profile information from it.

The personalization server PS comprises a processing unit PU dedicated to the generation of authentication keys and international identities.

It is assumed that the personalization server PS is able to perform an over-the-air (OTA) mechanism to obtain read/write access to a space memory of smart cards, in collaboration at least with the register HLR and the SMSC server of the telecommunication network TN.

To this end, the network interface NI of the personalization server PS may be assimilated to a Gateway API managing a database that stores in correspondence for each smart card an identifier of the smart card, the smart card manufacturer, the IMSI and the MSISDN (Mobile Subscriber Integrated Services Digital Network-Number). The interface INT has a set of libraries that contain the formats to use for each type of smart card and is able to format messages differently depending on the recipient smart card.

Furthermore, the network interface NI of the personalization server PS manages a database wherein admin codes ACps are stored in correspondence with different identifiers of smart cards or different identifiers of users. An admin code corresponds to a secret shared between the personalization server PS and a smart card SC, and is unique for each smart card SC. It is considered that an admin code allows a command provided through an OTA mechanism to obtain read/write access to the space memory of the smart card SC where the international identity IMSI and the authentication key AK are stored.

The communication device CD can be a radio communication mobile terminal. For example, the communication device CD is a mobile phone, or is a communicating Personal Digital Assistant PDA, or an intelligent telephone like SmartPhone.

In an example, the communication device CD is a cellular mobile radio communication terminal, connected by a channel to a radio access network of the telecommunication network TN, e.g. GSM (Global System for Mobile communications) or UMTS (Universal Mobile Telecommunications System) or LTE (Long Term Evolution).

In other examples, the communication device CD can be replaced by any device which is equipped with a smart card reader and can communicate with the smart card.

The communication device CD is associated with a smart card SC, for example included in the communication device CD.

The communication device CD comprises a radio interface RI, a processor PD, device memories MD and a smart card reader. The memories MD comprise various memories such as ROM memory, nonvolatile memory EEPROM or Flash, and RAM memory.

The radio interface RI transposes in frequency, converts digitally, demodulates and decodes messages received via the telecommunication network TN, and inversely transmits messages.

The device memories MD comprise the operating system of the communication device CD and an execution environment such as a Java virtual machine JVMT programmed in Java, for example J2ME.

In particular, in the nonvolatile memory of device memories MD are implemented device applications, originally written in a high level language of type object-oriented such as language Java compatible with virtual machine JVMT. The virtual machine JVMT can communicate with a virtual machine JVMC installed in the smart card SC via a predetermined communication protocol, like protocol APDU.

In order that device applications respectively communicate with card applications implemented in the smart card SC in accordance with predetermined communication protocol, an access interface to access resources and data in the smart card is implemented in the device memories DM for example under the form of a Java API (Application Programming Interface).

Device memories DM further include a communication interface, for example the SIM Toolkit engine, so that a main application SIM or USIM or any other application in the smart card communicates with the "outside world" via the communication device, for example with an application server. The communication interface manages commands and responses exchanged between the "outside world" and the main application SIM or USIM, for example by adapting them to short messages exchanged with a short message server.

The smart card SC, also known as microcontroller card or integrated circuit card, is a user identity module of UICC type associated with the communication device.

In one embodiment, a microcontroller in the smart card SC mainly comprises one or more processors PC, and card memories CM. The smart card exchange commands, or requests, and replies with the communication device CD via an input/output port of the smart card reader of the communication device CD with or without contact. The various components of the smart card may be interconnected by a bidirectional bus.

Card memories CM comprise memory of type Flash or ROM including codes and data for example of an operating system and a virtual machine JVMC compliant with the Java Card specification, or any other operating system.

Card memories CM comprise also memory of type Flash or EEPROM for storing for example identity numbers and other parameters of the profile of the user possessing the card, such as a PIN code, an international identity, an authentication key, an identifier of the smart card, an admin code ACsc, and other security data. It is considered that the communication device CD is owned by a user who is a subscriber of the telecommunication network TN, so card memories CM contains an admin code ACsc for accessing or modifying the smart card, and contains also an international identity IMSI and an authentication key AK, used to authenticate the user by the telecommunication network TN.

Card memories CM comprise also memory of type RAM serving more particularly to data processing.

Card memories CM comprise also a memory space to store card applications which are proprietary code or applets STK, e.g. SIM ToolKit, and that are installed during the manufacture of the smart card or possibly installed during use of the card at the request of the user or the operator.

In particular, a card personalization application CPA is stored in the card memories CM and has a read/write access especially to the international identity, the authentication key, and the identifier, for example under an OTA command presenting the admin code ACsc. The card personalization application CPA is able to handle commands and messages according to an OTA mechanism and is able to communicate with a corresponding device personalization application DPA stored in the device memories DM of the communication device CD for some functionalities such as an interface with the user, and is also able to communicate with the application server AS for the personalization of the smart card.

The application server AS is a network entity that is able to communicate with the communication device CD and that offers a web service requiring user authentication by communicating with client applications, like web browsers, implemented in communication devices.

Especially, the application server AS contains an authentication interface Al that manages a user authentication process based on security protocol, such as EAP/IKEv2 that is an Extensible Authentication Protocol based on the Internet Key Exchange protocol version 2, using authentication keys and international identities.

The application server AS manages a database DB containing user profiles and user secrets such as authentication keys and international identities.

According to an embodiment, the telecommunication network operator provides smart card to a user which has at least one profile valid in the register HLR of the telecommunication network. Then the operator configures a new profile on the smart card based on an authentication key AK_X and an international identity IMSI_X, on behalf of a given application server providing a web site and/or a service identified by a service identifier IDS_X. To this end, the processing unit PU of the personalization server PS generates the authentication key AK_X and the international identity IMSI_X. The network interface NI of the personalization server PS pushes the generated authentication key AK_X and international identity IMSI_X to the smart card and transmit them to the application server AS through a secured channel. Optionally, the personalization server does not need to store the generated authentication key AK_X and international identity IMSI_X.

Once the smart card and the profile are configured, the application server can authenticate the user using tools like IKEv2/EAP protocols and can establish a secured tunnel between the user and the server.

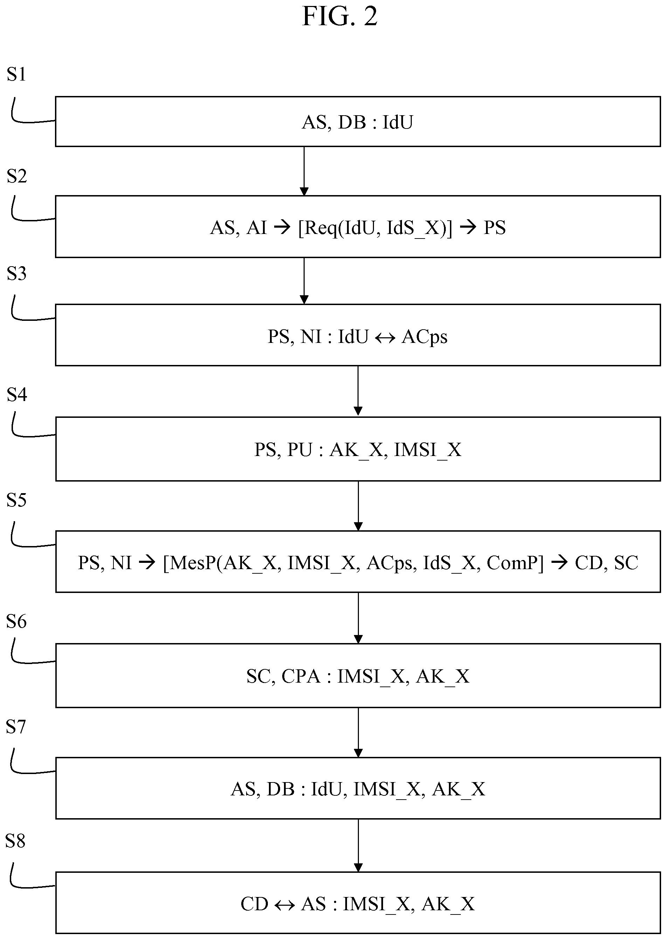

With reference to FIG. 2, a method for enabling a secured authentication between a communication device and a server providing a service according to one embodiment of the invention comprises steps S1 to S8 executed automatically within the communication system.

The method is described hereinafter with reference to the application server AS using services offered by the personalization server PS in order to be able to authenticate a user based on generated authentication key and international identity.

In an embodiment, the personalization server PS also stores the admin codes ACps respectively associated with smart cards SC of users who are subscribers of the telecommunication network TN. The admin codes ACps may be obtained from the smart card manufacturer, before the smart cards are provided to the operators. For example, the admin code ACps is stored in correspondence with at least one identifier IdU of the user of the smart card.

Once a smart card is provided to the operator and attributed to a user who becomes a subscriber of the operator, the operator personalizes the smart card by creating an international identity and an authentication key. The personalization of the smart card could be also outsourced to the smart card manufacturer. The created international identity and authentication key are stored in the register HLR in correspondence with the identifier of the smart card.

At step S1, the user establishes a connection with the application server AS providing a given service, via a device, for example the communication device CD.

The user solicits a request in order to be eligible for a secure authentication with the application server. For example, the user is logged in a website hosted by the application server, and performs actions and complete information fields for validating such a request. Especially, the user provides an identifier IdU of user, the identifier being then is stored in the database DB of the application server AS.

The user is invited to provide an identifier that uniquely identifies the smart card of the user. For example, the identifier IdU of user is a MSISDN number or a call number. The MSISDN is a number that is easy to remember and known by the user. In other examples, the identifier IdU can be a serial number or the identity IMSI.

In all cases, it is assumed that the identifier IdU asked by the application server corresponds to data also known by the personalization server PS.

At step S2, the application server AS establishes a secured session, for example of IPsec type, with the telecommunication network TN, in particular with the personalization server PS.

The authentication interface AI of the application server AS sends a request Req to the personalization server PS, the request containing the identifier IdU of user and an identifier IDS_X of the service provided by the application server AS.

At step S3, the network interface NI of the personalization server PS receives the request Req. The network interface NI retrieves an identifier IdU in a database corresponding to the identifier IdU contained in the received request.

Then, the network interface NI retrieves then the admin code ACps stored in correspondence with the identifier IdU of user in the database.

At step S4, the processing unit PU of the personalization server PS generates an authentication key AK_X and an international identity IMSI_X to be associated with the service identifier IDS_X and the identifier IdU.

At step S5, the network interface NI of the personalization server PS identifies the communication device CD by means of the identifier IdU. The network interface NI of the personalization server PS sends a personalization message MesP to the communication device CD, the personalization message MesP containing the authentication key AK_X, the international identity IMSI_X, the admin code ACps, the service identifier IDS_X, and a personalization command ComP.

The personalization message MesP is sent from the personalization server PS across the telecommunication network TN to the smart card SC via the communication interface of the communication device CD.

For example, the personalization message MesP is transformed by a short message center of the telecommunication network TN into a short message that is encrypted. The received personalization message MesP is decrypted by the smart card and the content of the message is temporarily stored in the card memories CM of the smart card to be executed by the card personalization application CPA.

In one embodiment, the personalization message MesP is transformed by a short message center SMSC of the telecommunication network TN into a short message that is encrypted. The received personalization message MesP is decrypted by the smart card and the content of the message is temporarily stored in the card memories CM of the smart card to be executed by the card personalization application CPA.

In another embodiment, the personalization message MesP contains data packets and is transmitted through the SGSN and GGSN nodes via a secured session for example of IPsec (Internet Protocol Security) type. In this case, a short message is first sent to the smart card that will launch the establishment of data connection with the personalization server.

It will be understood that the personalization message MesP can be decomposed in several messages, especially in the case where the personalization message MesP is in form of a short message.

At step S6, the card personalization application CPA interprets the personalization command ComP to execute the personalization of the smart card SC. The card personalization application CPA checks if the admin code ACps is valid, that is to say if the admin code ACps received in the personalization message MesP is compatible with the admin code ACsc initially stored in the smart card. In one example, the admin code ACps received in the personalization message MesP has to be the same as the admin code ACsc initially stored in the smart card. More generally, the admin codes may be tools used for authentication and ciphering procedures in case the personalization message MesP is decomposed in several messages.

If the admin code ACps is valid, the card personalization application CPA stores a new user profile containing at least the authentication key AK_X, the international identity IMSI_X, and the service identifier IdS_X.

This new profile is dedicated to the service X provided by the application server, besides the classic telecom profile of the user containing the authentication key AK and the international identity IMSI used for authentication with the telecommunication network TN.

Optionally, the card personalization application CPA can activate the device personalization application DPA in order to ask an acknowledgement of the user for the card personalization. For example, the device personalization application DPA displays a question like the following: "Do you accept to use the secured authentication for the service X?".

At step S7, the network interface NI of the personalization server PS sends a response Res to the application server AS, the response Res containing the authentication key AK_X and the international identity IMSI_X, and optionally the user identifier IdU.

The application server AS stores the received authentication key AK_X and international identity IMSI_X in correspondence with the user identifier IdU in the database D8, for further use in authentication of the user.

At step S8, the communication device CD establishes again a connection with the application server AS.

The authentication interface AI of the application server AS can use a secured authentication, based on a protocol such as EAP/IKEv2, using the authentication key AK_X and the international identity IMSI_X. To this end, the device personalization application DPA collaborates with the card personalization application CPA to retrieve the authentication key AK_X and the international identity IMSI_X.

The invention described here relates to a method and a server for enabling a secured authentication between a communication device and a server hosting a website. In an embodiment, the steps of the method of the invention are determined by the instructions of a computer program incorporated in a server such as the application server AS or the personalization server PS according to the invention. The program includes program instructions which, when said program is executed in a processor of the server the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

Although multiple embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

## Claims

1. A method for enabling a secured authentication between a communication device (CD) that is coupled with a smart card (SC) of a user being a subscriber of a telecommunication network (TN) and an application server (AS) that provides a service and is connected to the telecommunication network (TN), the method comprising the following steps in a personalization server (PS) included in the telecommunication network (TN):
receiving (S2) a request (Req) from the application server (AS), the request containing an identifier (IdU) of the user and an identifier (IdS_X) of said service,
generating (S4) an authentication key (AK_X) and an international identity (IMSI_X) associated with the identifier (IdS_X) of said service,
sending (S5) a message (MesP) to the communication device (CD), the message (MesP) containing the authentication key (AK_X), the international identity (IMSI_X), an admin code (ACps), the identifier (IdS_X) of said service, and a personalization command (ComP), in order that the smart card (SC) interprets (S6) the personalization command (ComP) to store the authentication key (AK_X), the international identity (IMSI_X) and the identifier (IdS_X) if the admin code (ACps) is valid,
sending (S7) a response (Res) to the application server (AS), the response (Res) containing the authentication key (AK_X) and the international identity (IMSI_X).

2. A method according to claim 1, wherein the application server (AS) is able to authenticate the communication device (CD) by means of a protocol using the authentication key (AK_X) and the international identity (IMSI_X).

3. A method according to claim 1 or 2, wherein the personalization server (PS) identifies the communication device (CD) by means of the identifier (IdU) of the user.

4. A method according to claim 3, wherein the identifier (IdU) of the user is a call number.

5. A method according to any of claims 1 to 4, wherein the personalization server (PS) retrieves the admin code (ACps) that was initially stored in a database in correspondence with an identifier of the user corresponding to the identifier (IdU) of the user comprised in the received request (Req).

6. A method according to any of claims 1 to 5, wherein an application (CPA) in the smart card (SC) checks if the admin code (ACps) received in the message (MesP) is compatible with the admin code (ACsc) initially stored in the smart card in order to determine if the admin code (ACps) is valid.

7. A method according to any of claims 1 to 6, wherein the message (MesP) is an encrypted short message.

8. A method according to any of claims 1 to 7, wherein the message (MesP) is decomposed in several messages.

9. A method according to any of claims 1 to 6, wherein the message (MesP) contains data packets sent to the smart card (SC) through a service node (SGSN) and a gateway node (GGSN) of the telecommunication network (TN2) via a secured session.

10. A method for enabling a secured authentication between a communication device (CD) that is coupled with a smart card (SC) of a user being a subscriber of a telecommunication network (TN) and an application server (AS) that provides a service and is connected to the telecommunication network (TN), the method comprising the following steps in the application server (AS):
sending (S2) a request (Req) to the personalization server (PS), the request containing an identifier (IdU) of the user and an identifier (IdS_X) of said service, in order that the personalization server (PS) generates an authentication key (AK_X) and an international identity (IMSI_X) associated with the identifier (IdS_X) of said service, and sends a message (MesP) to the communication device (CD), the message (MesP) containing the authentication key (AK_X), the international identity (IMSI_X), an admin code (ACps), the identifier (IdS_X) of said service, and a personalization command (ComP), in order that the smart card (SC) interprets (S6) the personalization command (ComP) to store the authentication key (AK_X), the international identity (IMSI_X) and the identifier (IdS_X) if the admin code (ACps) is valid,
receiving (S7) a response (Res) from the personalization server (PS), the response (Res) containing the authentication key (AK_X) and the international identity (IMSI_X).

11. A personalization server (PS) for enabling a secured authentication between a communication device (CD) that is coupled with a smart card (SC) of a user being a subscriber of a telecommunication network (TN) and an application server (AS) that provides a service and is connected to the telecommunication network (TN), the personalization server (PS) being included in the telecommunication network (TN) and comprising:
means (NI) for receiving a request (Req) from the application server (AS), the request containing an identifier (IdU) of the user and an identifier (IdS_X) of said service,
means (PU) for generating an authentication key (AK_X) and an international identity (IMSI_X) associated with the identifier (IdS_X) of said service,
means (NI) for sending a message (MesP) to the communication device (CD), the message (MesP) containing the authentication key (AK_X), the international identity (IMSI_X), an admin code (ACps), the identifier (IdS_X) of said service, and a personalization command (ComP), in order that the smart card (SC) interprets (S6) the personalization command (ComP) to store the authentication key (AK_X), the international identity (IMSI_X) and the identifier (IdS_X) if the admin code (ACps) is valid,
means (NI) for sending (S7) a response (Res) to the application server (AS), the response (Res) containing the authentication key (AK_X) and the international identity (IMSI_X).

12. An application server (AS) for enabling a secured authentication between a communication device (CD) that is coupled with a smart card (SC) of a user being a subscriber of a telecommunication network (TN) and the application server (AS) that provides a service and is connected to the telecommunication network (TN), the application server (AS) comprising:
means (AI) for sending a request (Req) to the personalization server (PS), the request containing an identifier (IdU) of the user and an identifier (IdS_X) of said service, in order that the personalization server (PS) generates an authentication key (AK_X) and an international identity (IMSI_X) associated with the identifier (IdS_X) of said service, and sends a message (MesP) to the communication device (CD), the message (MesP) containing the authentication key (AK_X), the international identity (IMSI_X), an admin code (ACps), the identifier (IdS_X) of said service, and a personalization command (ComP), in order that the smart card (SC) interprets (S6) the personalization command (ComP) to store the authentication key (AK_X), the international identity (IMSI_X) and the identifier (IdS_X) if the admin code (ACps) is valid,
means (AI) for receiving a response (Res) from the personalization server (PS), the response (Res) containing the authentication key (AK_X) and the international identity (IMSI_X).

13. An application server (AS) according to claim 12, wherein the application server (AS) is hosting a website providing said service.

14. A computer program adapted to be executed in an personalization server (PS) for enabling a secured authentication between a communication device (CD) that is coupled with a smart card (SC) of a user being a subscriber of a telecommunication network (TN) and an application server (AS) that provides a service and is connected to the telecommunication network (TN), the personalization server (PS) being included in the telecommunication network (TN), said program including instructions which, when said program is executed in said personalization server, execute the following steps:
receiving (S2) a request (Req) from the application server (AS), the request containing an identifier (IdU) of the user and an identifier (IdS_X) of said service,
generating (S4) an authentication key (AK_X) and an international identity (IMSI_X) associated with the identifier (IdS_X) of said service,
sending (S5) a message (MesP) to the communication device (CD), the message (MesP) containing the authentication key (AK_X), the international identity (IMSI_X), an admin code (ACps), the identifier (IdS_X) of said service, and a personalization command (ComP), in order that the smart card (SC) interprets (S6) the personalization command (ComP) to store the authentication key (AK_X), the international identity (IMSI_X) and the identifier (IdS_X) if the admin code (ACps) is valid,
sending (S7) a response (Res) to the application server (AS), the response (Res) containing the authentication key (AK_X) and the international identity (IMSI_X).

15. A computer program adapted to be executed in an application server (AS) for enabling a secured authentication between a communication device (CD) that is coupled with a smart card (SC) of a user being a subscriber of a telecommunication network (TN) and the application server (AS) that provides a service and is connected to the telecommunication network (TN), said program including instructions which, when said program is executed in said application server, execute the following steps :
sending (S2) a request (Req) to the personalization server (PS), the request containing an identifier (IdU) of the user and an identifier (IdS_X) of said service, in order that the the personalization server (PS) generates an authentication key (AK_X) and an international identity (IMSI_X) associated with the identifier (IdS_X) of said service, and sends a message (MesP) to the communication device (CD), the message (MesP) containing the authentication key (AK_X), the international identity (IMSI_X), an admin code (ACps), the identifier (IdS_X) of said service, and a personalization command (ComP), in order that the smart card (SC) interprets (S6) the personalization command (ComP) to store the authentication key (AK_X), the international identity (IMSI_X) and the identifier (IdS_X) if the admin code (ACps) is valid,
receiving (S7) a response (Res) from the personalization server (PS), the response (Res) containing the authentication key (AK_X) and the international identity (IMSI_X).

## Patentansprüche

1. Verfahren für eine gesicherte Authentifizierung zwischen einem Kommunikationsgerät (CD), das mit einer Chipkarte (SC) eines Benutzers gekoppelt ist, der Abonnent eines Telekommunikationsnetzwerks (TN) ist, und einem Anwendungsserver (AS), der einen Dienst bereitstellt und mit dem Telekommunikationsnetzwerk (TN) verbunden ist, wobei das Verfahren die folgenden Schritte in einem Personalization-Server (PS) umfasst, der in dem Telekommunikationsnetzwerk (TN) eingeschlossen ist:
Empfangen (S2) einer Anforderung (Req) vom Anwendungsserver (AS), wobei die Anforderung eine Kennung (IdU) des Benutzers und eine Kennung (IdS_X) von besagtem Dienst umfasst,
Erzeugen (S4) eines Authentifizierungsschlüssels (AK_X) und einer internationalen Kennung, die mit der Kennung (IdS_X) besagten Dienstes verbunden ist,
Senden (S5) einer Nachricht (MesP) an das Kommunikationsgerät (CD),
wobei die Nachricht (MesP) den Authentifizierungsschlüssel (AK_X), die internationale Kennung (IMSI_X), einen Admin-Code (ACps), die Kennung (IdS_X) besagten Dienstes und einen Personalization-Befehl (ComP), damit die Chipkarte (SC) den Personalization-Befehl (ComP) interpretiert (S6), um
den Authentifizierungsschlüssel (AK_X), die internationale Kennung (IMSI_X) und die Kennung (IdS X) zu speichern, wenn der Admin-Code (ACps) gültig ist,
Senden (S7) einer Antwort (Res) an den Anwendungsserver (AS), wobei die Antwort (Res) den Authentifizierungsschlüssel (AK_X) und die internationale Kennung (IMSI_X) umfasst.

2. Verfahren nach Anspruch 1, wobei der Anwendungsserver (AS) in der Lage ist, das Kommunikationsgerät (CD) mittels eines Protokolls zu authentifizieren, das den Authentifizierungsschlüssel (AK_X) und die internationale Kennung (IMSI_X) verwendet.

3. Verfahren nach Anspruch 1 oder 2, wobei der Personalization-Server (PS) das Kommunikationsgerät (CD) mittels der Kennung (IdU) des Benutzers identifiziert.

4. Verfahren nach Anspruch 3, wobei die Kennung (IdU) des Benutzers eine Rufnummer ist.

5. Verfahren nach einem beliebigen der Ansprüche 1 bis 4, wobei der Personalization-Server (PS) den Admin-Code (ACps) abruft, der ursprünglich in einer Datenbank gespeichert war in Verbindung mit einer Kennung des Benutzers, die der Kennung (IdU) des Benutzers entspricht, die in der empfangenen Anforderung (Req) umfasst war.

6. Verfahren nach einem beliebigen der Ansprüche 1 bis 5, wobei eine Anwendung (CPA) in der Chipkarte (SC) überprüft, ob der Admin-Code (ACps), der in der Nachricht (MesP) empfangen worden ist, kompatibel ist mit dem Admin-Code (ACsc), der ursprünglich in der Chipkarte gespeichert war, um zu bestimmen, ob der Admin-Code (ACps) gültig ist.

7. Verfahren nach einem beliebigen der Ansprüche 1 bis 6, wobei die Nachricht (MesP) eine verschlüsselte Kurznachricht ist.

8. Verfahren nach einem beliebigen der Ansprüche 1 bis 7, wobei die Nachricht (MesP) in verschiedene Nachrichten zersetzt wird.

9. Verfahren nach einem beliebigen der Ansprüche 1 bis 6, wobei die Nachricht (MesP) Datenpakete enthält, die an die Chipkarte (SC) durch einen Service-Knoten (SGSN) und einen Gateway-Knoten (GGSN) des Telekommunikationsnetzwerks (TN2) über eine gesicherte Sitzung gesendet wurden.

10. Verfahren zum Ermöglichen einer gesicherten Authentifizierung zwischen einem Kommunikationsgerät (CD), das mit einer Chipkarte (SC) eines Benutzers gekoppelt ist, der Abonnent eines Telekommunikationsnetzwerks (TN) ist, und einem Anwendungsserver (AS), der einen Dienst bereitstellt und mit dem Telekommunikationsnetzwerk (TN) verbunden ist, wobei das Verfahren die folgenden Schritte in dem Anwendungsserver (AS) umfasst:
Senden (S2) einer Anforderung (Req) an den Personalization-Server (PS), wobei die Anforderung eine Kennung (IdU) des Benutzers und eine Kennung (IdS_X) besagten Dienstes enthält, damit der Personalization-Server (PS) einen Authentifizierungsschlüssel (AK X) und eine internationale Kennung (IMSI_X) generiert, die mit der Kennung (IdS_X) von besagtem Dienst verbunden sind und eine Nachricht (MesP) an das Kommunikationsgerät (CD) sendet, wobei die Nachricht (MesP), welche den Authentifizierungsschlüssel (AK_X), die internationale Kennung (IMSI_X), einen Admin-Code (ACps), die Kennung (IdS_X) besagten Dienstes und einen Personalization-Befehl (ComP) enthält, damit die Chipkarte (SC) den Personalization-Befehl (ComP) interpretiert (S6), um den Authentifizierungsschlüssel (AK_X), die internationale Kennung (IMSI_X) und die Kennung (IdS_X) zu speichern, wenn der Admin-Code (ACps) gültig ist,
Empfangen (S7) einer Antwort (Res) von dem Personalization-Server (PS), wobei die Antwort (Res) den Authentifizierungsschlüssel (AK_X) und die internationale Kennung (IMSI_X) enthält.

11. Personalization-Server (PS) zum Ermöglichen einer gesicherten Authentifizierung zwischem einem Kommunikationsgerät (CD), das mit einer Chipkarte (SC) eines Benutzers gekoppelt ist, der Abonnent eines Telekommunikationsnetzwerks (TN) ist, und einem Anwendungsserver (AS), der einen Dienst bereitstellt und mit dem Telekommunikationsnetzwerk (TN) verbunden ist, wobei der Personalization-Server (PS) in dem Telekommunikationsnetzwerk (TN) eingeschlossen ist und umfasst:
Mittel (NI) zum Empfangen einer Anforderung (Req) vom Anwendungsserver (AS), wobei die Anforderung eine Kennung (IdU) des Benutzers und eine Kennung (IdS_X) von besagtem Dienst umfasst,
Mittel (PU) zum Generieren eines Authentifizierungsschlüssels (AK_X) und einer internationalen Kennung (IMSI_X), die mit der Kennung (IdS_X) besagten Dienstes verbunden sind,
Mittel (NI) zum Senden einer Nachricht (MesP) an das Kommunikationsgerät (CD), wobei die Nachricht (MesP) den Authentifizierungsschlüssel (AK_X), die internationale Kennung (IMSI_X), einen Admin-Code (ACps), die Kennung (IdS_X) besagten Dienstes und einen Personalization-Befehl (ComP) enthält, damit die Chipkarte (SC) den Personalization-Befehl (ComP) interpretiert (S6), um den Authentifizierungsschlüssel (AK_X), die internationale Kennung (IMSI_X) und die die Kennung (IdS_X) zu speichern, wenn der Admin-Code (ACps) gültig ist,
Mittel (NI) zum Senden (S7) einer Antwort (Res) an den Anwendungsserver (AS), wobei die Antwort (Res) den Authentifizierungsschlüssel (AK_X) und die internationale Kennung (IMSI_X) umfasst.

12. Anwendungsserver (AS) zum Ermöglichen einer gesicherten Authentifizierung zwischen einem Kommunikationsgerät (CD), das mit einer Chipkarte (SC) eines Benutzers gekoppelt ist, der Abonnent eines Telekommunikationsnetzwerks (TN) ist, und dem Anwendungsserver (AS), der einen Dienst bereitstellt und mit dem Telekommunikationsnetzwerk (TN) verbunden ist, wobei der Anwendungsserver (AS) umfasst:
Mittel (AI) zum Senden einer Anforderung (Req) an den Personalization-Server (PS), wobei die Anforderung eine Kennung (IdU) des Benutzers und eine Kennung (IdS_X) besagten Dienstes enthält, damit der Personalization-Server (PS) einen Authentifizierungsschlüssel (AK X) und eine internationale Kennung (IMSI_X) generiert, die mit der Kennung (IdS_X) von besagtem Dienst verbunden sind und eine Nachricht (MesP) an das Kommunikationsgerät (CD) sendet, wobei die Nachricht (MesP), welche den Authentifizierungsschlüssel (AK_X), die internationale Kennung (IMSI_X), einen Admin-Code (ACps), die Kennung (IdS_X) besagten Dienstes und einen Personalization-Befehl (ComP) enthält, damit die Chipkarte (SC) den Personalization-Befehl (ComP) interpretiert (S6), um den den Authentifizierungsschlüssel (AK_X), die internationale Kennung (IMSI_X) und die Kennung (IdS_X) zu speichern, wenn der Admin-Code (ACps) gültig ist,
Mittel (AI) zum Empfangen einer Antwort (Res) von dem Personalization-Server (PS), wobei die Antwort (Res) den Authentifizierungsschlüssel (AK_X) und die internationale Kennung (IMSI_X) enthält.

13. Anwendungsserver (AS) nach Anspruch 12, wobei der Anwendungsserver (AS) eine Webseite hostet, welche besagten Dienst bereitstellt.

14. Computerprogramm, das ausgelegt ist zum Ausführen in einem Personalization-Server (PS), zum Ermöglichen einer gesicherten Authentifizierung zwischen einem Kommunikationsgerät (CD), das mit einer Chipkarte (SC) eines Benutzers gekoppelt ist, der Abonnent eines Telekommunikationsnetzwerks (TN) ist, und einem Anwendungsserver (AS), der einen Dienst bereitstellt und mit dem Telekommunikationsnetzwerk (TN) verbunden ist, wobei der Personalization-Server (PS) in dem Telekommunikationsnetzwerk (TN) eingeschlossen ist, wobei besagtes Programm Anweisungen einschließt, die bei Ausführen des Programms in besagtem Personalization-Server die folgenden Schritte ausführen:
Empfangen (S2) einer Anforderung (Req) vom Anwendungsserver (AS), wobei die Anforderung eine Kennung (IdU) des Benutzers und eine Kennung (IdS_X) von besagtem Dienst umfasst,
Erzeugen (S4) eines Authentifizierungsschlüssels (AK_X) und einer internationalen Kennung (IMSI_X), die verbunden sind mit einer Kennung (IdS_X) besagten Dienstes,
Senden (S5) einer Nachricht (MesP) an das Kommunikationsgerät (CD), wobei die Nachricht (MesP) den Authentifizierungsschlüssel (AK_X), die internationale Kennung (IMSI_X), einen Admin-Code (ACps), die Kennung (IdS_X) besagten Dienstes und einen Personalization-Befehl (ComP) enthält, damit die Chipkarte (SC) den Personalization-Befehl (ComP) interpretiert (S6), um den Authentifizierungsschlüssel (AK_X), die internationale Kennung (IMSI_X) und die die Kennung (IdS_X) zu speichern, wenn der Admin-Code (ACps) gültig ist,
Senden (S7) einer Antwort (Res) an den Anwendungsserver (AS), wobei die Antwort (Res) den Authentifizierungsschlüssel (AK_X) und die internationale Kennung (IMSI_X) umfasst.

15. Computerprogramm, das ausgelegt ist zum Ausführen in einem Anwendungsserver (AS) zum Ermöglichen einer gesicherten Authentifizierung zwischen einem Kommunikationsgerät (CD), das mit einer Chipkarte (SC) eines Benutzers gekoppelt ist, der Abonnent eines Telekommunikationsnetzwerks (TN) ist, und dem Anwendungsserver (AS), der einen Dienst bereitstellt und mit dem Telekommunikationsnetzwerk (TN) verbunden ist, wobei besagtes Programm Anweisungen einschließt, welche, wenn besagtes Programm in besagtem Anwendungsserver ausgeführt wird, die folgenden Schritte ausführt:
Senden (S2) einer Anforderung (Req) an den Personalization-Server (PS), wobei die Anforderung eine Kennung (IdU) des Benutzers und eine Kennung (IdS_X) besagten Dienstes enthält, damit der Personalization-Server (PS) einen Authentifizierungsschlüssel (AK X) und eine internationale Kennung (IMSI_X) generiert, die mit der Kennung (IdS_X) von besagtem Dienst verbunden sind und eine Nachricht (MesP) an das Kommunikationsgerät (CD) sendet, wobei die Nachricht (MesP), welche den Authentifizierungsschlüssel (AK_X), die internationale Kennung (IMSI_X), einen Admin-Code (ACps), die Kennung (IdS_X) besagten Dienstes und einen Personalization-Befehl (ComP) enthält, damit die Chipkarte (SC) den Personalization-Befehl (ComP) interpretiert (S6), um den Authentifizierungsschlüssel (AK_X), die internationale Kennung (IMSI_X) und die Kennung (IdS_X) zu speichern, wenn der Admin-Code (ACps) gültig ist,
Empfangen (S7) einer Antwort (Res) von dem Personalization-Server (PS), wobei die Antwort (Res) den Authentifizierungsschlüssel (AK_X) und die internationale Kennung (IMSI_X) enthält.

## Revendications

1. Procédé pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service et qui est connecté au réseau de télécommunication (TN), le procédé comprenant les étapes suivantes dans un serveur de personnalisation (PS) inclus dans le réseau de télécommunication (TN) :
recevoir (S2) une demande (Req) du serveur d'application (AS), la demande contenant un identifiant (IdU) de l'utilisateur et un identifiant (IdS_X) dudit service,
générer (S4) une clé d'authentification (AK_X) et une identité internationale (IMSI_X) associées à l'identifiant (IdS_X) dudit service,
envoyer (S5) un message (MesP) au dispositif de communication (CD), le message (MesP) contenant la clé d'authentification (AK_X), l'identité internationale (IMSI_X), un code administrateur (ACps), l'identifiant (IdS_X) dudit service, et une commande de personnalisation (ComP), afin que la carte à puce (SC) interprète (S6) la commande de personnalisation (ComP) pour stocker la clé d'authentification (AK_X), l'identité internationale (IMSI_X) et l'identifiant (IdS_X) si le code administrateur (ACps) est valide,
envoyer (S7) une réponse (Res) au serveur d'application (AS), la réponse (Res) contenant la clé d'authentification (AK_X) et l'identité internationale (IMSI_X).

2. Procédé selon la revendication 1, dans lequel le serveur d'application (AS) peut authentifier le dispositif de communication (CD) au moyen d'un protocole utilisant la clé d'authentification (AK_X) et l'identité internationale (IMSI_X).

3. Procédé selon la revendication 1 ou 2, dans lequel le serveur de personnalisation (PS) identifie le dispositif de communication (CD) au moyen de l'identifiant (IdU) de l'utilisateur.

4. Procédé selon la revendication 3, dans lequel l'identifiant (IdU) de l'utilisateur est un numéro d'appel.

5. Procédé selon l'une quelconque des revendications 1 à 4, dans lequel le serveur de personnalisation (PS) récupère le code administrateur (ACps) qui a été stocké initialement dans une base de données en correspondance avec un identifiant de l'utilisateur correspondant à l'identifiant (IdU) de l'utilisateur compris dans la demande (Req) reçue.

6. Procédé selon l'une quelconque des revendications 1 à 5, dans lequel une application (CPA) dans la carte à puce (SC) vérifie si le code administrateur (ACps) reçu dans le message (MesP) est compatible avec le code administrateur (ACsc) initialement stocké dans la carte à puce afin de déterminer si le code administrateur (ACps) est valide.

7. Procédé selon l'une quelconque des revendications 1 à 6, dans lequel le message (MesP) est un message court crypté.

8. Procédé selon l'une quelconque des revendications 1 à 7, dans lequel le message (MesP) est décomposé en plusieurs messages.

9. Procédé selon l'une quelconque des revendications 1 à 6, dans lequel le message (MesP) contient des paquets de données envoyés à la carte à puce (SC) à travers un noeud de service (SGSN) et un noeud de passerelle (GGSN) du réseau de télécommunication (TN2) par l'intermédiaire d'une session sécurisée.

10. Procédé pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service et qui est connecté au réseau de télécommunication (TN), le procédé comprenant les étapes suivantes dans le serveur d'application (AS) :
envoyer (S2) une demande (Req) au serveur de personnalisation (PS), la demande contenant un identifiant (IdU) de l'utilisateur et un identifiant (IdS_X) dudit service, afin que le serveur de personnalisation (PS) génère une clé d'authentification (AK_X) et une identité internationale (IMSI_X) associées à l'identifiant (IdS_X) dudit service, et envoie un message (MesP) au dispositif de communication (CD), le message (MesP) contenant la clé d'authentification (AK_X), l'identité internationale (IMSI_X), un code administrateur (ACps), l'identifiant (IdS_X) dudit service et une commande de personnalisation (ComP), afin que la carte à puce (SC) interprète (S6) la commande de personnalisation (ComP) pour stocker la clé d'authentification (AK_X), l'identité internationale (IMSI_X) et l'identifiant (IdS_X) si le code administrateur (ACps) est valide,
recevoir (S7) une réponse (Res) du serveur de personnalisation (PS), la réponse (Res) contenant la clé d'authentification (AK_X) et l'identité internationale (IMSI_X).

11. Serveur de personnalisation (PS) pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service et qui est connecté au réseau de télécommunication (TN), le serveur de personnalisation (PS) étant inclus dans le réseau de télécommunication (TN) et comprenant :
des moyens (NI) pour recevoir une demande (Req) du serveur d'application (AS), la demande contenant un identifiant (IdU) de l'utilisateur et un identifiant (IdS_X) dudit service,
des moyens (PU) pour générer une clé d'authentification (AK_X) et une identité internationale (IMSI_X) associées à l'identifiant (IdS_X) dudit service,
des moyens (NI) pour envoyer un message (MesP) au dispositif de communication (CD), le message (MesP) contenant la clé d'authentification (AK_X), l'identité internationale (IMSI_X), un code administrateur (ACps), l'identifiant (IdS_X) dudit service et une commande de personnalisation (ComP), afin que la carte à puce (SC) interprète (S6) la commande de personnalisation (ComP) pour stocker la clé d'authentification (AK_X), l'identité internationale (IMSI_X) et l'identifiant (IdS_X) si le code administrateur (ACps) est valide,
des moyens (NI) pour envoyer (S7) une réponse (Res) au serveur d'application (AS), la réponse (Res) contenant la clé d'authentification (AK_X) et l'identité internationale (IMSI_X).

12. Serveur d'application (AS) pour activer une authentification sécurisée entre un dispositif de communication (CD), qui est couplé à une carte à puce (SC) d'un utilisateur qui est abonné à un réseau de télécommunication (TN), et le serveur d'application (AS) qui fournit un service et qui est connecté au réseau de télécommunication (TN), le serveur d'application (AS) comprenant :
des moyens (AI) pour envoyer une demande (Req) au serveur de personnalisation (PS), la demande contenant un identifiant (IdU) de l'utilisateur et un identifiant (IdS_X) dudit service, afin que le serveur de personnalisation (PS) génère une clé d'authentification (AK_X) et une identité internationale (IMSI_X) associées à l'identifiant (IdS_X) dudit service, et envoie un message (MesP) au dispositif de communication (CD), le message (MesP) contenant la clé d'authentification (AK_X), l'identité internationale (IMSI_X), un code administrateur (ACps), l'identifiant (IdS_X) dudit service et une commande de personnalisation (ComP), afin que la carte à puce (SC) interprète (S6) la commande de personnalisation (ComP) pour stocker la clé d'authentification (AK_X), l'identité internationale (IMSI_X) et l'identifiant (IdS_X) si le code administrateur (ACps) est valide,
des moyens (AI) pour recevoir une réponse (Res) du serveur de personnalisation (PS), la réponse (Res) contenant la clé d'authentification (AK_X) et l'identité internationale (IMSI_X).

13. Serveur d'application (AS) selon la revendication 12, le serveur d'application (AS) hébergeant un site Internet fournissant ledit service.

14. Programme informatique adapté pour être exécuté dans un serveur de personnalisation (PS) pour activer une authentification sécurisée entre un dispositif de communication (CD), qui est couplé à une carte à puce (SC) d'un utilisateur qui est abonné à un réseau de télécommunication (TN), et un serveur d'application (AS) qui fournit un service et qui est connecté au réseau de télécommunication (TN), le serveur de personnalisation (PS) étant inclus dans le réseau de télécommunication (TN), ledit programme comprenant des instructions qui, lorsque ledit programme est exécuté dans ledit serveur de personnalisation, exécutent les étapes suivantes :
recevoir (S2) une demande (Req) du serveur d'application (AS), la demande contenant un identifiant (IdU) de l'utilisateur et un identifiant (IdS_X) dudit service,
générer (S4) une clé d'authentification (AK_X) et une identité internationale (IMSI_X) associées à l'identifiant (IdS_X) dudit service,
envoyer (S5) un message (MesP) au dispositif de communication (CD), le message (MesP) contenant la clé d'authentification (AK_X), l'identité internationale (IMSI_X), un code administrateur (ACps), l'identifiant (IdS_X) dudit service, et une commande de personnalisation (ComP), afin que la carte à puce (SC) interprète (S6) la commande de personnalisation (ComP) pour stocker la clé d'authentification (AK_X), l'identité internationale (IMSI_X) et l'identifiant (IdS_X) si le code administrateur (ACps) est valide,
envoyer (S7) une réponse (Res) au serveur d'application (AS), la réponse (Res) contenant la clé d'authentification (AK_X) et l'identité internationale (IMSI_X).

15. Programme informatique adapté pour être exécuté dans un serveur d'application (AS) pour activer une authentification sécurisée entre un dispositif de communication (CD), qui est couplé à une carte à puce (SC) d'un utilisateur qui est abonné à un réseau de télécommunication (TN), et le serveur d'application (AS) qui fournit un service et qui est connecté au réseau de télécommunication (TN), ledit programme comprenant des instructions qui, lorsque ledit programme est exécuté dans ledit serveur d'application, exécutent les étapes suivantes :
envoyer (S2) une demande (Req) au serveur de personnalisation (PS), la demande contenant un identifiant (IdU) de l'utilisateur et un identifiant (IdS_X) dudit service, afin que le serveur de personnalisation (PS) génère une clé d'authentification (AK_X) et une identité internationale (IMSI_X) associées à l'identifiant (IdS_X) dudit service, et envoie un message (MesP) au dispositif de communication (CD), le message (MesP) contenant la clé d'authentification (AK_X), l'identité internationale (IMSI_X), un code administrateur (ACps), l'identifiant (IdS_X) dudit service et une commande de personnalisation (ComP), afin que la carte à puce (SC) interprète (S6) la commande de personnalisation (ComP) pour stocker la clé d'authentification (AK_X), l'identité internationale (IMSI_X) et l'identifiant (IdS_X) si le code administrateur (ACps) est valide,
recevoir (S7) une réponse (Res) du serveur de personnalisation (PS), la réponse (Res) contenant la clé d'authentification (AK_X) et l'identité internationale (IMSI_X).
